# EUROPÄISCHE PATENTSCHRIFT

(11) **EP 2 706 260 B1**
(45) Veröffentlichungstag und Bekanntmachung des Hinweises auf die Patenterteilung: **10.07.2019**
(21) Anmeldenummer: 13181125.9
(22) Anmeldetag: 21.08.2013
(51) Int. Cl.: F16F 15/139, F16F 15/14

(54) **Drehmomentübertragungseinrichtung**
Torque transmission device
Dispositif de transmission de couple

(30) Priorität: 06.09.2012 DE 102012215854
(43) Veröffentlichungstag der Anmeldung: 12.03.2014
(73) Patentinhaber: Schaeffler Technologies AG & Co. KG, 91074 Herzogenaurach (DE)
(72) Erfinder: Maienschein, Stephan, 76534 Baden-Baden (DE)

(56) Entgegenhaltungen:
- WO-A1-2009/152800
- DE-A1- 10 005 547
- DE-A1-102009 024 743
- DE-A1-102011 101 156

## Beschreibung

Die Erfindung betrifft eine Drehmomentübertragungseinrichtung nach dem Oberbegriff von Anspruch 1.

Derartige Drehmomentübertragungseinrichtungen sind allgemein bekannt. So zeigt WO2010037661 eine Drehmomentübertragungseinrichtung umfassend eine nasslaufende Kupplung mit einem mit einer Antriebsseite verbindbaren Kupplungseingangsteil und ein mit dem Kupplungseingangsteil mittels einer Reibfläche in Reibeingriff bringbares Kupplungsausgangsteil sowie einer Fliehkraftpendeleinrichtung zur Tilgung von Drehschwingungen. Die Fliehkraftpendeleinrichtung umfasst einen Pendelmassenträger und beidseitig daran aufgenommene Pendelmassen.

Dabei ist das Kupplungsausgangsteil mit dem Pendelmassenträger befestigt.

Die Aufgabe liegt darin, eine verbesserte Anbindung des Kupplungsausgangsteils an einem Tilgermassenträger bereitzustellen, insbesondere um den vorhandenen Bauraum besser ausnutzen zu können und/oder einer zuverlässigere Drehmomentübertragung zwischen den beiden Bauteilen und/oder eine kostengünstigere Befestigung zu ermöglichen.

Die Aufgabe wird durch alle Merkmale des Gegenstands gemäß Anspruch 1 gelöst.

Dementsprechend wird eine Drehmomentübertragungseinrichtung umfassend eine als Anfahrkupplung ausgebildete nasslaufende Kupplung vorgeschlagen, aufweisend ein mit einer Antriebsseite verbindbares Kupplungseingangsteil, ein mit dem Kupplungseingangsteil mittels einer Reibfläche in Reibeingriff bringbares Kupplungsausgangsteil, eine Tilgereinrichtung zur Tilgung von Drehschwingungen, umfassend einen Tilgermassenträger und eine daran aufgenommene Tilgermasse. Dabei ist der Tilgermassenträger radial weiter außen als die Reibflächen mit dem Kupplungsausgangsteil verbunden. Dadurch kann eine verbesserte Anbindung des Kupplungsausgangsteils an einem Tilgermassenträger bewirkt werden, insbesondere wird der vorhandene Bauraum besser ausgenutzt und eine zuverlässigere Drehmomentübertragung zwischen den beiden Bauteilen und eine kostengünstigere Befestigung ermöglicht.

Unter Tilgereinrichtung wird ein System mit wenigstens einer Masse verstanden, wobei die Größe der Masse derart bemessen ist, um eine Tilgung von Torsionsschwingungen bewirken zu können. Dabei kann die Masse drehfest an dem Tilgermassenträger angebunden sein.

In einer weiteren vorteilhaften speziellen Ausgestaltung der Erfindung ist das Kupplungsausgangsteil über eine Verzahnung mit dem Tilgermassenträger verbunden.

Ein weiterer unabhängiger, insbesondere losgelöst von der relativen Anordnung zu den Reibflächen zu betrachtender erfinderischer Gedanke ist die Verbindung zwischen Kupplungsausgangsteil und Tilgereinrichtung, inbesondere Fliehkraftpendeleinrichtung über eine lösbare Verbindung, insbesondere über eine Verzahnung. Das Kupplungsausgangsteil kann auch hier als Reibscheibenelement oder als Kolbenelement oder als Lamellenträger ausgestaltet sein.

In einer weiteren speziellen Ausführungsform der Erfindung ist das Kupplungsausgangsteil als Reibscheibenelement ausgeführt, das an wenigstens einer der axialen Seiten einen Reibbelag aufnimmt oder in Kontakt mit dem Reibbelag bringbar ist. Vorzugsweise weist das Reibscheibenelement im Bereich des Reibflächenbereichs einen radialen Erstreckungsbereich auf. Dabei kann die Verbindung mit dem Kupplungsausgangsteil über eine Ankopplung an dem radialen Erstreckungsbereich erfolgen.

Bevorzugt kann das Reibscheibenelement radial außerhalb des Reibflächenbereichs einen axialen Erstreckungsbereich aufweisen, wobei die Verbindung mit dem Tilgermassenträger an dem axialen Erstreckungsbereich erfolgt.

In einer speziellen Ausgestaltung der Erfindung ist die Tilgereinrichtung als Fliehkraftpendeleinrichtung ausgebildet und somit der Tilgermassenträger als Pendelmassenträger und die Tilgermasse als beidseitig an dem Pendelmassenträger angeordnetes und gegenüber diesem verlagerbares Pendelmassenpaar ausgebildet. Vorteilhafterweise sind die Pendelmassen eines Pendelmassenpaars mit durch den Pendelmassenträger durchgreifenden Abstandsbolzen miteinander verbunden und das Pendelmassenpaar ist über in dem Pendelmassenträger aufgenommene Abrollelemente gegenüber dem Pendelmassenträger entlang einer Pendellaufbahn verlagerbar.

In einer weiteren bevorzugten Ausgestaltung der Erfindung ist der Tilgermassenträger auf der Abtriebsnabe zentriert. Auch kann der Tilgermassenträger mit der Abtriebsnabe verbunden sein, insbesondere drehfest verbunden sein.

Allgemein kann das Kupplungsausgangsteil als Reibscheibenelement oder als Kolbenelement oder als Lamellenträger ausgestaltet sein.

In einer weiteren speziellen Ausgestaltung der Erfindung umfasst die Drehmomentübertragungseinrichtung einen Torsionsschwingungsdämpfer mit einem Dämpfereingangsteil, das über die Wirkung von Energiespeicherelementen gegenüber einem Dämpferausgangsteil begrenzt verdrehbar ist. Auch können wenigstens zwei Torsionsschwingungsdämpfer vorgesehen sein, beispielsweise parallel oder seriell wirksam verschaltet, insbesondere zu Bildung eines Reihendämpfers.

Die Anordnung des Torsionsschwingungsdämpfers in Bezug auf das Kupplungsgehäuse ist beliebig. Ein Torsionsschwingungsdämpfer kann außerhalb oder innerhalb des Kupplungsgehäuses angeordnet sein. Auch kann der Torsionsschwingungsdämpfer radial außerhalb und/oder radial innerhalb der Tilgermassen angeordnet sein.

Weitere Vorteile und vorteilhafte Ausgestaltungen der Erfindung ergeben sich aus der Beschreibung und den Abbildungen, bei deren Darstellung zugunsten der Übersichtlichkeit auf eine maßstabsgetreue Wiedergabe verzichtet wurde. Alle erläuterten Merkmale sind nicht nur in der angegebenen Kombination, sondern auch in anderen Kombinationen beziehungsweise in Alleinstellung anwendbar, ohne den Rahmen der Erfindung zu verlassen.
Die Erfindung wird im Folgenden unter Bezugnahme auf die Abbildungen im Speziellen beschrieben. Es zeigen im Einzelnen:
- Figur 1:: Querschnitt eines Ausschnitts einer Drehmomentübertragungseinrichtung in einer speziellen Ausführungsform der Erfindung.
- Figur 2:: Querschnitt eines Ausschnitts einer Drehmomentübertragungseinrichtung in einer weiteren speziellen Ausführungsform der Erfindung.
- Figur 3:: Querschnitt eines Ausschnitts einer Drehmomentübertragungseinrichtung in einer weiteren speziellen Ausführungsform der Erfindung.
- Figur 4:: Prinzipdarstellungen weiterer Drehmomentübertragungseinrichtungen in jeweils speziellen Ausführungsformen der Erfindung.

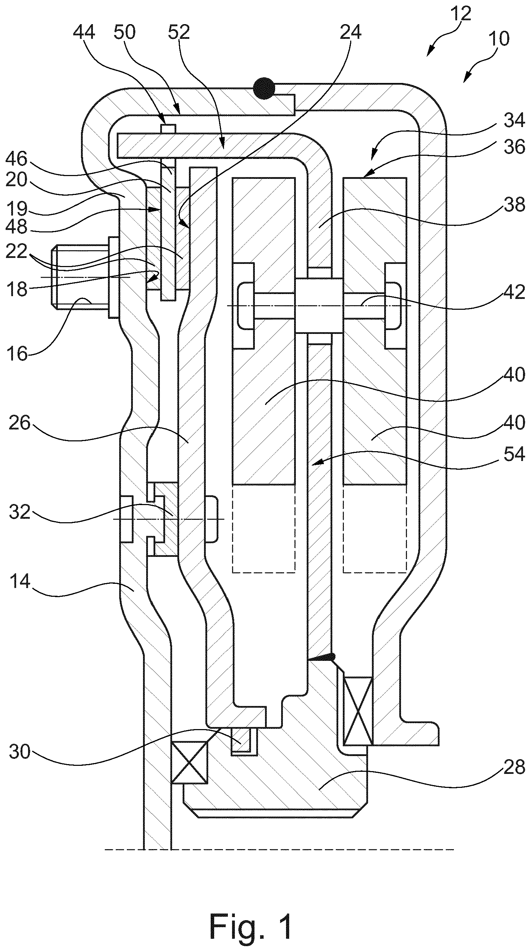

Figur 1 zeigt einen Querschnitt eines Ausschnitts einer Drehmomentübertragungseinrichtung 10 in einer speziellen Ausführungsform der Erfindung. Bestandteil der Drehmomentübertragungseinrichtung 10 bildet eine als Anfahrkupplung ausgebildete nasslaufende Kupplung 12, die von einem zweiteilig ausgebildeten Kupplungsgehäuse 14 umschlossen wird, worin ein Fluid aufgenommen ist. Das Kupplungsgehäuse 14 ist mit einem Mitnehmerelement 16 mit einer Antriebsseite verbindbar. Das Mitnehmerelement 16 ist an dem Kupplungsgehäuse 14 befestigt, insbesondere verschweißt oder vernietet.

An einer vorzugsweise radial weiter außen liegenden Stelle ist das Kupplungsgehäuse 14 im Innenbereich mit einem Reibflächenbereich 18 zur Bildung eines Kupplungseingangsteils 19 ausgestattet, zum Kontakt mit einem an einem Kupplungsausgangsteil 20 angebrachten Reibbelag 22 bei geschlossener Kupplung. Das Kupplungsausgangsteil 20 weist auch auf der gegenüberliegenden axialen Seite einen Reibbelag 22 auf, zum Reibeingriff mit einem komplementären Reibflächenbereich 24 eines Kolbens 26.

Der Kolben 26 ist axial verlagerbar auf einer Abtriebsnabe 28 und gegenüber dieser mit Hilfe einer Dichtung 30 abgedichtet aufgenommen. An dem Kupplungsgehäuse 14 ist der Kolben 26 drehfest mit einer Nietverbindung 32 befestigt.

Weiterhin weist die nasslaufende Kupplung 12 eine Tilgereinrichtung 34, insbesondere eine Fliehkraftpendeleinrichtung 36 im Inneren des Kupplungsgehäuses auf. Die Fliehkraftpendeleinrichtung 36 umfasst einen Pendelmassenträger 38, an dem beidseitig gegenüber diesem verlagerbare und zu einem Pendelmassenpaar verbundene Pendelmassen 40 angeordnet sind. Zu der Verbindung der Pendelmassen 40 zu einem Pendelmassenpaar dienen durch den Pendelmassenträger 38 durchgreifende Abstandsbolzen 42. Das Pendelmassenpaar ist wiederum mit Hilfe von durch den Pendelmassenträger 38 durchgreifende Abrollelemente gegenüber dem Pendelmassenträger 38 begrenzt entlang einer Pendellaufbahn verlagerbar. Die Abrollelemente können als Wälzkörper oder als Lagerelemente, beispielsweise Rollenlager ausgeführt sein.

Der Pendelmassenträger 38 ist mit der Abtriebsnabe 28 drehfest verbunden, insbesondere mit dieser verschweißt. Die Abtriebsnabe 28 ist mit einer Getriebeeingangswelle verbindbar.

In einem radial außerhalb der Reibflächenbereiche 18, 24 liegenden Abschnitt ist der Pendelmassenträger 38 mit dem Kupplungsausgangsteil 20 über einer Verzahnung 44 verbunden. Das Kupplungsausgangsteil 20 ist als Reibscheibenelement 46 ausgeführt, das an beiden axialen Seiten jeweils einen Reibbelag 22 aufnimmt. Im Bereich des Reibflächenbereichs 18 weist das Reibscheibenelement 46 einen radialen Erstreckungsbereich 48 auf und an diesem radial außen die Verzahnung 44 zum Eingriff in eine Gegenverzahnung 50 an dem Pendelmassenträger 38. Dazu ist der Pendelmassenträger 38 axial umgebogen, so dass die Verzahnung 44, 50 zur Verbindung mit dem Kupplungsausgangsteil 20 an dem axialen Erstreckungsbereich 52 des Pendelmassenträgers 38 ausgebildet ist.

Axial beabstandet von der Verzahnung 50 geht der axiale Erstreckungsbereich 52 in einen radialen Erstreckungsbereich 54 des Pendelmassenträgers 38 über, an dem auch die Pendelmassen 40 aufgenommen sind.

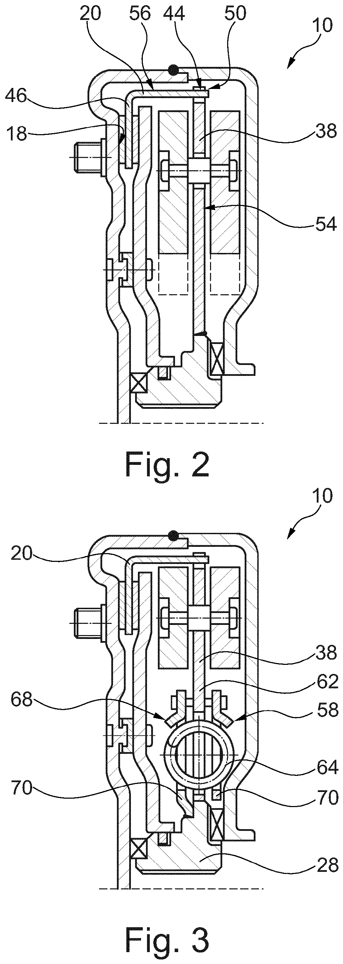

In Figur 2 ist ein Querschnitt eines Ausschnitts einer Drehmomentübertragungseinrichtung 10 in einer weiteren speziellen Ausführungsform der Erfindung dargestellt. Der wesentlichste Unterschied zu der Ausführungsform nach Figur 1 ist die Anordnung und die Ausgestaltung des Kupplungsausgangsteils 20, das hier als Reibscheibenelement 46 ausgebildet ist. Das Reibscheibenelement 46 weist radial außerhalb des Reibflächenbereichs 18 einen axialen Erstreckungsbereich 56 auf, wobei die Verbindung mit dem Pendelmassenträger 38 an dem axialen Erstreckungsbereich 56 über eine Verzahnung 44, 50 erfolgt. Der Pendelmassenträger 38 weist einen radialen Erstreckungsbereich 54 auf, an dessen radial äußerem Ende die Gegenverzahnung 50 zur Verbindung mit dem Kupplungsausgangsteil 20 angeordnet ist.

Figur 3 zeigt einen Querschnitt eines Ausschnitts einer Drehmomentübertragungseinrichtung 10 in einer weiteren speziellen Ausführungsform der Erfindung. Diese Ausgestaltung ist der aus Figur 2 ähnlich, wobei hier ein Torsionsschwingungsdämpfer 58 wirksam zwischen dem Kupplungsausgangsteil 20 und der Abtriebsnabe 28 angeordnet ist. Dazu ist der Pendelmassenträger 38 einteilig mit einem Dämpfereingangsteil 62 ausgebildet, das wiederum über die Wirkung von Energiespeicherelementen 64 gegenüber einem Dämpferausgangsteil 68 begrenzt verdrehbar ist. Das Dämpferausgangsteil 68 ist aus zwei axial benachbart zu dem Dämpfereingangsteil 62 angeordneten Dämpferseitenscheibenelementen 70 gebildet.

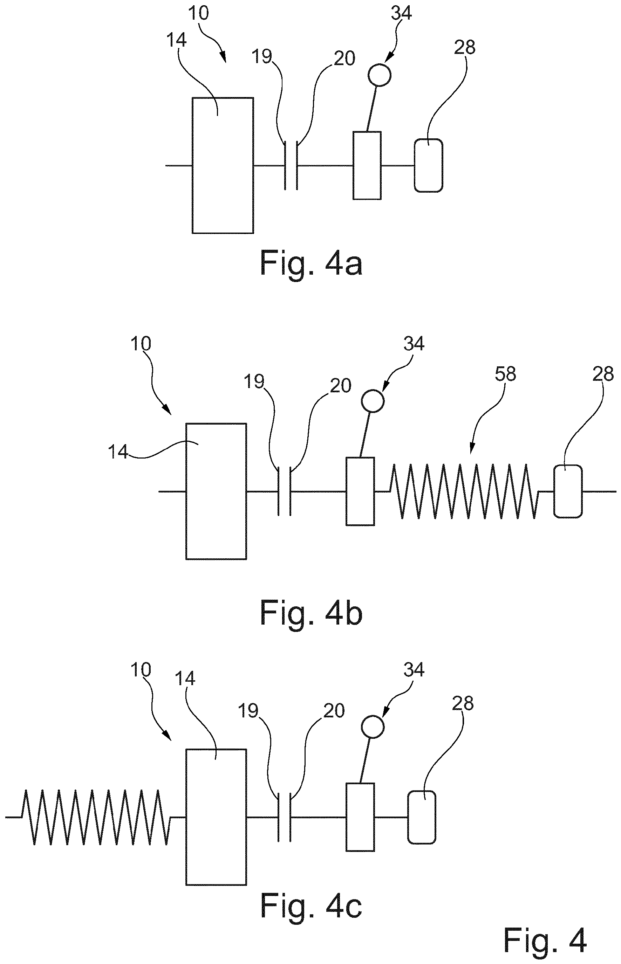

In Figur 4 sind Prinzipdarstellungen weiterer Drehmomentübertragungseinrichtungen 10 in jeweils speziellen Ausführungsformen der Erfindung dargestellt. Figur 4a entspricht dabei von der Wirkungsweise her den Ausgestaltungen der Figuren 1 bis 2, während Figur 4b der Figur 3 entspricht. Denn in Figur 4b ist wirksam zwischen Kupplungsausgangsteil 20 und Abtriebsnabe 28 ein Torsionsschwingungsdämpfer 58 eingebracht, wobei die Tilgereinrichtung 34 wirksam vor dem Torsionsschwingungsdämpfer 58 angeordnet ist.

Figur 4c zeigt die Anordnung des Torsionsschwingungsdämpfers 58 wirksam vor der Kupplung, insbesondere vor dem Kupplungsgehäuse 14. Es ist denkbar, den Torsionsschwingungsdämpfer 58 in dieser Anordnung in dem Kupplungsgehäuse 14 oder außerhalb des Kupplungsgehäuses 14 anzuordnen.

### Bezugszeichenliste

- 10: Drehmomentübertragungseinrichtung
- 12: Kupplung
- 14: Kupplungsgehäuse
- 16: Mitnehmerelement
- 18: Reibflächenbereich
- 19: Kupplungseingangsteil
- 20: Kupplungsausgangsteil
- 22: Reibbelag
- 24: Reibflächenbereich
- 26: Kolben
- 28: Abtriebsnabe
- 30: Dichtung
- 32: Nietverbindung
- 34: Tilgereinrichtung
- 36: Fliehkraftpendeleinrichtung
- 38: Pendelmassenträger
- 40: Pendelmasse
- 42: Abstandsbolzen
- 44: Verzahnung
- 46: Reibscheibenelement
- 50: Verzahnung
- 52: Erstreckungsbereich
- 54: Erstreckungsbereich
- 56: Erstreckungsbereich
- 58: Torsionsschwingungsdämpfer
- 62: Dämpfereingangsteil
- 64: Energiespeicherelement
- 68: Dämpferausgangsteil
- 70: Dämpferseitenscheibenelement

## Patentansprüche

1. Drehmomentübertragungseinrichtung (10) umfassend eine eine als Anfahrkupplung ausgebildete nasslaufende Kupplung (12), aufweisend:
ein mit einer Antriebsseite verbindbares Kupplungseingangsteil (19),
ein mit dem Kupplungseingangsteil (19) mittels einer Reibfläche (22) in Reibeingriff bringbares Kupplungsausgangsteil (20),
eine Tilgereinrichtung (34) zur Tilgung von Drehschwingungen, umfassend einen Tilgermassenträger und eine daran aufgenommene Tilgermasse,
**dadurch gekennzeichnet, dass** der Tilgermassenträger radial weiter außen als die Reibflächen (22) mit dem Kupplungsausgangsteil (20) verbunden ist.

2. Drehmomentübertragungseinrichtung (10) nach Anspruch 1, wobei das Kupplungsausgangsteil (20) über eine Verzahnung (44, 50) mit dem Tilgermassenträger verbunden ist.

3. Drehmomentübertragungseinrichtung (10) nach Anspruch 2, wobei das Kupplungsausgangsteil (20) als Reibscheibenelement (46) ausgeführt ist, das an wenigstens einer der axialen Seiten einen Reibbelag (22) aufnimmt oder in Kontakt mit dem Reibbelag (20) bringbar ist.

4. Drehmomentübertragungseinrichtung (10) nach Anspruch 3, wobei das Reibscheibenelement (46) im Bereich des Reibflächenbereichs (18) einen radialen Erstreckungsbereich (48) aufweist.

5. Drehmomentübertragungseinrichtung (10) nach Anspruch 4, wobei das Reibscheibenelement (46) radial außerhalb des Reibflächenbereichs (18) einen axialen Erstreckungsbereich (56) aufweist, wobei die Verbindung mit dem Tilgermassenträger an dem axialen Erstreckungsbereich (56) erfolgt.

6. Drehmomentübertragungseinrichtung (10) nach einer der vorangehenden Ansprüche, wobei die Tilgereinrichtung (34) als Fliehkraftpendeleinrichtung (36) ausgebildet ist und somit der Tilgermassenträger als Pendelmassenträger (38) und die Tilgermasse als beidseitig an dem Pendelmassenträger (38) angeordnete und gegenüber diesem verlagerbare Pendelmassen ausgebildet ist.

7. Drehmomentübertragungseinrichtung (10) nach Anspruch 6, wobei die Pendelmassen (40) eines Pendelmassenpaars mit durch den Pendelmassenträger (38) durchgreifenden Abstandsbolzen (42) miteinander verbunden sind und das Pendelmassenpaar über in dem Pendelmassenträger (38) aufgenommene Abrollelemente gegenüber dem Pendelmassenträger (38) entlang einer Pendellaufbahn verlagerbar ist

8. Drehmomentübertragungseinrichtung (10) nach einer der vorangehenden Ansprüche, wobei die Drehmomentübertragungseinrichtung (10) einen Torsionsschwingungsdämpfer (58) mit einem Dämpfereingangsteil (62), das über die Wirkung von Energiespeicherelementen (64) gegenüber einem Dämpferausgangsteil (68) begrenzt verdrehbar ist, umfasst.

9. Drehmomentübertragungseinrichtung (10) nach einer der vorangehenden Ansprüche, wobei der Tilgermassenträger auf der Abtriebsnabe (28) zentriert und/oder mit der Abtriebsnabe (28) verbunden ist.

10. Drehmomentübertragungseinrichtung (10) nach Anspruch 3 oder 4, wobei der Tilgermassenträger einen ayialen Erstreckungsbereich aufweist, wobei die Verbindung mit dem Reibscheibenelement (46) an dem axialen Erstreckungsbereich erfolgt.

## Claims

1. Torque transmission device (10) comprising a wetrunning clutch (12) designed as a starting clutch, having:
a clutch input part (19) which can be connected to a drive side,
a clutch output part (20) which can be brought into frictional engagement with the clutch input part (19) by means of a friction surface (22),
an absorber device (34) for absorbing torsional vibrations, comprising an absorber mass support and an absorber mass received thereon,
**characterized in that** the absorber mass support is connected to the clutch output part (20) radially further to the outside than the friction surfaces (22).

2. Torque transmission device (10) according to Claim 1, wherein the clutch output part (20) is connected to the absorber mass support via a toothing (44, 50).

3. Torque transmission device (10) according to Claim 2, wherein the clutch output part (20) is configured as a friction disc element (46) which receives a friction lining (22) on at least one of the axial sides or can be brought into contact with the friction lining (20).

4. Torque transmission device (10) according to Claim 3, wherein the friction disc element (46) has a radial region of extent (48) in the region of the friction surface region (18).

5. Torque transmission device (10) according to Claim 4, wherein the friction disc element (46) has an axial region of extent (56) radially outside of the friction surface region (18), wherein the connection to the absorber mass support occurs at the axial region of extent (56).

6. Torque transmission device (10) according to one of the preceding claims, wherein the absorber device (34) is designed as a centrifugal pendulum device (36) and hence the absorber mass support is designed as a pendulum mass support (38) and the absorber mass is designed as pendulum masses which are arranged on both sides of the pendulum mass support (38) and which are displaceable with respect thereto.

7. Torque transmission device (10) according to Claim 6, wherein the pendulum masses (40) of a pendulum mass pair are connected to one another by spacer bolts (42) which pass through the pendulum mass support (38), and the pendulum mass pair is displaceable with respect to the pendulum mass support (38) along a pendulum runway via rolling elements received in the pendulum mass support (38).

8. Torque transmission device (10) according to one of the preceding claims, wherein the torque transmission device (10) comprises a torsional vibration damper (58) having a damper input part (62) which is rotatable to a limited extent with respect to a damper output part (68) via the action of energy storage elements (64).

9. Torque transmission device (10) according to one of the preceding claims, wherein the absorber mass support is centred on the output hub (28) and/or connected to the output hub (28).

10. Torque transmission device (10) according to Claim 3 or 4, wherein the absorber mass support has an axial region of extent, wherein the connection to the friction disc element (46) occurs at the axial region of extent.

## Revendications

1. Dispositif de transmission de couple (10) comprenant un embrayage humide (12) conçu comme un embrayage de démarrage, comprenant :
une partie d'entrée d'embrayage (19) pouvant être reliée à un côté entraînement,
une partie de sortie d'embrayage (20) pouvant être amenée en engagement à friction avec la partie d'entrée d'embrayage (19) au moyen d'une surface de friction (22),
un moyen amortisseur (34) destiné à amortir des vibrations de torsion et comprenant un support de masse d'amortissement et une masse d'amortissement logée au niveau de celui-ci,
**caractérisé en ce que** le support de masse d'amortissement est relié à l'élément de sortie d'embrayage (20) radialement plus à l'extérieur que les surfaces de friction (22).

2. Dispositif de transmission de couple (10) selon la revendication 1, la partie de sortie d'embrayage (20) étant reliée au support de masse d'amortissement par le biais d'une denture (44, 50).

3. Dispositif de transmission de couple (10) selon la revendication 2, la partie de sortie d'embrayage (20) étant conçue comme un élément de disque de friction (46) qui reçoit une garniture de friction (22) sur au moins un des côtés axiaux ou qui peut être amené en contact avec la garniture de friction (20).

4. Dispositif de transmission de couple (10) selon la revendication 3, l'élément de disque de friction (46) comportant au niveau de la région de surface de friction (18) une région d'extension radiale (48).

5. Dispositif de transmission de couple (10) selon la revendication 4, l'élément de disque de friction (46) comportant une région d'extension axiale (56) radialement à l'extérieur de la région de surface de friction (18), la liaison avec le support de masse d'amortissement étant effectuée au niveau de la région d'extension axiale (56).

6. Dispositif de transmission de couple (10) selon l'une des revendications précédentes, le moyen amortisseur (34) étant conçu comme un dispositif pendulaire centrifuge (36) et ainsi le support de masse d'amortissement étant conçu comme un support de masse pendulaire (38) et la masse d'amortissement étant conçu comme des masses pendulaires disposées des deux côtés du support de masse pendulaire (38) et déplaçables par rapport à celui-ci.

7. Dispositif de transmission de couple (10) selon la revendication 6, les masses pendulaires (40) d'une paire de masses pendulaires étant reliées entre elles par des boulons d'espacement (42) s'engageant à travers le support de masse pendulaire (38) et la paire de masses pendulaires étant déplaçable le long d'une piste pendulaire par rapport au support de masse pendulaire (38) par le biais d'éléments roulants logés dans le support de masse pendulaire (38).

8. Dispositif de transmission de couple (10) selon l'une des revendications précédentes, le dispositif de transmission de couple (10) comprenant un amortisseur de vibrations de torsion (58) comportant une partie d'entrée d'amortisseur (62) qui ne peut tourner que de façon limitée par rapport à une partie de sortie d'amortisseur (68) par l'action d'éléments accumulateurs d'énergie (64).

9. Dispositif de transmission de couple (10) selon l'une des revendications précédentes, le support de masse d'amortissement étant centré sur le moyen de sortie (28) et/ou relié au moyen de sortie (28).

10. Dispositif de transmission de couple (10) selon la revendication 3 ou 4, le support de masse d'amortissement comportant une région d'extension axiale, la liaison avec l'élément de disque de friction (46) étant effectuée dans la région d'extension axiale.
